(19) Europäisches Patentamt / European Patent Office / Office européen des brevets

(11) **EP 3 159 319 A1**

(12) **EUROPEAN PATENT APPLICATION**
published in accordance with Art. 153(4) EPC

(43) Date of publication:
**26.04.2017 Bulletin 2017/17**

(21) Application number: **15735062.0**

(22) Date of filing: **09.01.2015**

(51) Int Cl.:
***C04B 14/06*** (2006.01)

(86) International application number:
**PCT/CN2015/000022**

(87) International publication number:
**WO 2015/103945 (16.07.2015 Gazette 2015/28)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **09.01.2014 CN 201410009959**

(71) Applicant: **Liu, Xianquan
Nanping, Fujian 353100 (CN)**

(72) Inventor: **Liu, Xianquan
Nanping, Fujian 353100 (CN)**

(74) Representative: **Evans, Huw David Duncan
Xuesong Yang
47 Drysgol Road
Radyr
Cardiff South Wales CF15 8BS (GB)**

(54) **NEW METHOD FOR REMOVING SHELL**

(57) A new method for removing a shell. For characteristics of a shell in sea sand, the shell in the sea sand is separated from the sea sand according to characteristic differences between sand grains and the shell. By using the method, the objective of processing, in a large scale, shells in the sea sand is successfully achieved, the method needs low operational expenditure and has a good separation effect, and the service life is long.

**EP 3 159 319 A1**

**Description**

**Technical Field**

The present invention relates to the field of sea sand processing, in particular to a new method for removing shell.

**Background Art**

With the rapidly economic development in China and increasing expansion of construction scale, especially the fast promotion of urban process in the Southeast coastal area, many coastal cities face the dilemma of river sand resource exhaustion. With increasing decrease of river sand resources and enhance of the people's awareness that river sand exploitation causes riverbed damage and ecological damage, application of treated sea sand in urban buildings is already the inevitable sand using trend of future buildings.

The sea sand is used for buildings long before at home and abroad, and at present, above 90% of building sand in Japan is treated sea sand. Shells contained in most of sea sand are the harmful ingredient affecting the properties of building materials, the strength of the shells is far lower than that of the sand, the shells can be easily broken off by hand, the shells in concrete are equivalent to clods in harmfulness, and national 'Building Sand' standards stipulate that 'clods should be grains which have the original grain size of greater than 1.18 mm in sand but have the grain size of 600 $\mu$m after undergoing immersion cleaning with water and pinching by hand'.

The shells in the sea sand are not the same in size from small to large and are dispersed and distributed in the sea sand, and investigations on the building damage situations caused by the earthquake after the great earthquake in Kobe, Japan show that houses built by adopting the sea sand collapse firstly. Due to the fact that Japan imposed strict restrictions on the chlorine ion content of sea sand for buildings long ago and adopted the measure that 'steel bar rust removers' are used in the buildings using the sea sand to prevent steel bar corrosion, the collapse of the houses built by using the sea sand was not caused by the reduction of the structural strength of buildings because of the corrosion of excessive chlorine ions to steel bars. Hidden dangers brought by the building sea sand mixed with the shells to the buildings can be imaged.

The harm of the shells in the sea sand to the structural strength of buildings is also recognized in our country, the national building sand standards stipulate that sand containing shells is not allowed. For solving the currently arisen problems brought by large-amount usage of desalted sea sand serving as a building material, China compiled 'Technical Specifications of Sea Sand Concrete Application' at the end of 2009, which impose strict restrictions on the shell content in building sea sand and stipulate that the maximum size of the shells in sea sand should not exceed 4.75 mm. In addition, the shell content should conform to the regulations in the following table:

The shell content in sea sand

| strength grade of concrete | $\geqq$C40 | C35~C30 | C25~C15 |
|---|---|---|---|
| the shell content (wt%) | $\leqq$3 | $\leqq$5 | $\leqq$8 |

The study on a technology for removing shells in sea sand is imperative. Generally, screens are adopted to remove the shells greater than a certain grain size in coastal sea sand treatment practice in our country, the defect of this method is that the shells greater than the set grain size are screened out while the sea sand of the same grain size is screened out, the shells smaller than the grain size cannot be removed, and therefore, shells are still contained in the treated sea sand. If the shells are directly used for buildings with the sea sand, the strength and durability of the concrete are reduced, and potential safety hazards are formed.

The sea sand with the shell content exceeding the standard requirements cannot be used for buildings, and the shells in the sea sand are difficult to remove effectively, so that the sea sand is hardly used for high-strength concrete, and resource waste is caused.

At present, many studies and trials are made for how to remove shells in sea sand with the grain size smaller than the hole diameter of the screens, for example, the sea sand is treated by adopting a spiral grading machine, but a large quantity of shells are still contained in the treated sea sand. A chemical method is also adopted by some people for treatment, but this method consumes huge costs, also causes environmental pollution and is not ideal in treatment effect.

**Summary of the Invention**

The invention aims at overcoming the above defects and providing a new method for removing shell capable of feasibly and efficiently achieving shell and sea sand separation.

Shells and sea sand are mixed together to form heterogeneous mixtures, the shells and the sea sand are similar in density, the apparent density of the shells is slightly large, the shells are dispersedly distributed from small to large in size, and the shells and the sea sand are difficult to separate by adopting a common method.

In the sea sand, the shells and sand grains are mixed together, the grain size of the sand grains in the sea sand is distributed from small to large, and the shells in the sea sand are relatively complicated in texture and are different in size and also different in shape after undergoing long-time seawater movements. The shells generally exist in a shell skin mode, are in shapes of irregular flakes, while the sea sand is massive or quasi-rounded solid grains. According to the invention, multiple sea sand and shell mixtures of a certain grain size intervals are formed by adopting a multi-stage screening concept, and then sea sand and shells are separated by utilizing their different properties.

The grain size intervals in the application are defined as the grain size intervals of sea sand grains in the sea sand grain and shell mixtures.

Firstly, the technical scheme for achieving the concept of the present invention is that:

A new method of removing shells contained in sea sand, comprising the steps of:

(1) screening: screening sea mixed with shells by using screens with different apertures respectively so as to obtain sand and shell mixtures with different size ranges of sea sand particles; the apertures ratio of the screens adjacent in aperture is not greater than 20;

(2) separating: re-screening said mixtures or re-screening part of said mixtures obtained in said step (1) respectively by using screens with long and narrow apertures, enabling the shells in the mixtures to pass through the screen apertures and enabling the sand grains to be retained by the screens, thereby separating the sea sand grains from the shells; the maximum horizontal width of the long and narrow apertures of each screen not being greater than the upper limit value of the particle size range of the sea sand in said mixtures being re-screened thereof, and the longitudinal lengths of the long and narrow screen holes are greater than lower limit values of the grain size intervals of the sand grains in the sea sand grain and shell mixtures screened again.

Further, the technical scheme of the present invention is that:

The maximum horizontal width of the long and narrow apertures of each screen in said step (2) being not greater than the lower limit value of the particle size range of the sea sand in said mixtures being re-screened.

Then further, in the step (2), the longitudinal lengths of the long and narrow screen holes are greater than upper limit values of the grain size intervals of the sand grains in the sea sand grain and shell mixtures screened again.

Yet further, after the screening of the step (1) and before separation of the step (2), the method further comprises the following steps:

(1') crushing: crushing said mixtures or crushing part of said mixtures obtained in said step (1) respectively, wherein the shells in the mixtures being crushed into smaller pieces because their strength is lower than that of the sea sand.

Yet still further, between the step (1') and the separation of the step (2), the method further comprises the following steps:

(1") performing secondary screening: secondarily screening the sea sand grain and shell mixtures of different grain size intervals obtained in the step (1') respectively, wherein the hole diameters of the screens for secondary screening are not greater than the upper limit values of the grain size intervals of the sea sand and shell mixtures screened secondarily.

Preferably, the long and narrow screen holes in the separation step are in shapes of ovals, rectangles, parallelograms, trapezoids or any other long and narrow shapes. Then preferably, the screen holes of the screens for the screening of the step (1) are round or square or triangular.

More preferably, the screens used for the separation of the step (2) are gratings, and the spacing between every two adjacent grating bars is not greater than the upper limit values of the grain size intervals of the sand grains in the sea sand grain and shell mixtures screened again.

The invention further provides another method for removing shells in sea sand, the technical scheme of the method is that:

A new method of removing shells contained in sea sand, comprising the steps of:

(1) screening: screening sea sand mixed with shells by using screens with different apertures so as to obtain sand and shells mixtures with different particle size ranges of sea sand; the apertures ratio of the screens adjacent in aperture is not greater than 20;

(2) crushing: crushing said mixtures or crushing part of said mixtures obtained in said step (1) respectively, the shells in the mixtures being crushed into smaller pieces because their strength is lower than that of the sea sand;

(3) separating: re-screening said mixtures or re-screening part of said mixtures obtained in said step (2) respectively by using screens with its aperture not being greater than the upper limit value of the particle size range of the sea sand in the mixtures being re-screened thereof, enabling the shells in the mixtures to pass through the apertures of the screens and enabling the sand grains to be retained by the screens, thereby separating the sea sand grains from the shells;

Further, the technical scheme of the method can be also that:

The hole diameters of the screens for re-screening in the separation of the step (3) are not greater than the lower limit values of the grain size intervals of the sand grains in the mixtures screened again.

Still further, the hole diameters of the screens for screening of the step (1) are in the range of 75 $\mu$m to 10 mm.

Yet further, the screen holes of the screens for the screening of the step (1) are round or square or triangular.

The present invention further provides another method for removing shells in sea sand, the technical scheme of the method is that:

A new method of removing shells contained in sea sand, comprising the steps of:

(1) screening: screening sea sand mixed with shells by using screens with long and narrow apertures but different horizontal widths of the apertures for each screen so as to obtain sand and shell mixtures with different particle size ranges of sea sand, wherein the horizontal width ratio of the screen apertures of the screens adjacent in horizontal width is not greater than 20;

(2) separating: re-screening said mixtures or re-screening part of said mixtures obtained in said step (1) respectively by using screens with the maximum width of the apertures of each screen being greater than the lower limit value of the particle size range of the sea sand grains in said mixtures being re-screened thereof, enabling the shells in the mixtures to be kept by the screens and enabling the sand grains to pass through the apertures of the screens, thus separating the sea sand grains from the shells and obtaining the sand grains with different particle size ranges.

Further, the technical scheme of the method can be also that:

Different horizontal widths of screens for the screening of the step (1) are gratings with different grating bar gaps, and the gap ratio of the gratings adjacent in grating bar gap size is not greater than 20.

Yet still further, the screen holes of the screens for the separation of the step (2) are round or square or triangular.

The invention further provides another method for removing shells in sea sand, the technical scheme of the method is that:

A new method of removing shells contained in sea sand, comprising the steps of:

(1) screening: screening sea sand mixed with shells by using screens with long and narrow apertures but different horizontal width for each screen so as to obtain sand and shell mixtures with different particle size ranges of the sea sand, wherein the horizontal width ratio of the screen apertures of the screens adjacent in horizontal width is not greater than 20;

(2) crushing: crushing said mixtures or crushing part of said mixtures obtained in said step (1) respectively, the shells in the mixtures being crushed into smaller pieces because their strength is lower than that of the sea sand;

(3) separating: re-screening said mixtures or re-screening part of said mixtures obtained in said step (2) respectively by using screens with its apertures of each screen not being greater than the upper limit values of the particle size range of the sea sand grains in said mixtures being re-screened thereof, enabling the shells in the mixtures to pass through the apertures of the screens and enabling the sand grains to be retained by the screens, thereby separating the sea sand grains from the shells.

Further, the technical scheme of the method can be also that:

The screens for the screening of the step (1) are gratings with different grating bar gaps, and the gap ratio of the gratings adjacent in grating bar gap size is not greater than 20.

Preferably, the screens used for the separation of the step (3) are screens with long and narrow screen holes and different in horizontal width, and the horizontal widths of the screens are not greater than 1.5 times of the upper limit values of the grain size intervals of the sand grains in the sea sand grain and shell mixtures screened again.

More preferably, the screens used for the separation of the step (3) are gratings, and the spacing between every two adjacent grating bars is not greater than 1.5 times of the upper limit values of the grain size intervals of the sand grains in the sea sand grain and shell mixtures screened again.

The invention further provides another method for removing shells in sea sand, the technical scheme of the method is that:

A new method for removing shell, characterized in that, comprising the following steps:

(1) screening: screening sea sand mixed with shells by using screens with different apertures so as to obtain sand and shell mixtures with different particle size ranges of the sea sand; the apertures ratio of the screens adjacent in aperture is not greater than 20;

(2) crushing: crushing said mixtures or crushing part of said mixtures obtained in said step (1) respectively, the shells in the mixtures being crushed into smaller pieces because their strength is lower than that of the sea sand;

(3) hydraulic separating: washing said mixtures or washing part of said mixtures obtained in said step (2) by using upward medium flows with different flow velocities respectively, the shells in the mixtures being flowed upwardly along with said medium flows because of its settling final velocity lower than the velocities of upward medium flow, the sea sand grains in the mixtures settling downwardly because of its settling final velocities higher than the velocities of the upward medium flow, thereby separating the sea sand grains from the shells; wherein the velocities of the upward medium flows should be not higher than the settling final velocities of the sand grains being washed,but should be higher than the settling final velocities of said crushed shells.

Further, the technical scheme of the method can be also that:

The different hole diameters of screens used for the screening of the step (1) are screens with long and narrow screen holes and different in horizontal width.

Yet still further, the technical scheme of the method can be also that:

The different hole diameters of screens used for the screening of the step (1) are gratings with different grating bar gaps. The gap ratio of the gratings adjacent in gap size is not greater than 20.

The invention further provides a method of removing shells contained in sea sand, comprising the steps of:

(1) hydraulic separating: washing sea sand mixed with shells by using upward medium flows of different flow velocities, such that the sea sand grains and shells which having their settling final velocities higher than the flow velocity of the respective upward medium flow settle downwardly, and such that sea sand grains and shells which having settling final velocity lower than the flow velocity of the respective upward medium being flowed upwardly along with the respective upward medium flows, thereby obtaining sand and shell mixtures with respective different ranges of particle size of sea sand;

(2) crushing: crushing said mixtures or crushing part of said mixtures obtained in said step (1) respectively, wherein the shells in the mixtures are crushed into smaller pieces because their strength is lower than that of the sea sand;

(3) separating: screening said mixtures or screening part of each mixture obtained in said step (2) respectively by using screens having apertures of a size smaller than the upper limit values of the respective particle size range of the sea sand grains in the mixture being screened thereof, enabling the crushed shells in the mixtures to pass through the screen apertures and enabling the sand grains to be retained by the screens, thereby separating the sea sand grains from the shells;

Further, the technical scheme of the method can be also that:

The screens used for the screening of the step (3) are screens with long and narrow screen holes and different in horizontal width.

Yet still further, the technical scheme of the method can be also that:

The screens for the screening of the step (3) are gratings with different grating bar gaps, and the gaps among grating bars are smaller than 1.5 times of the upper limit values of the grain size intervals of the sand grains in the screened mixtures.

The invention further provides a method of removing shells contained in sea sand, comprising the steps of:

(1) hydraulic separating: washing sea sand mixed with shells by using upward medium flows with different flowing velocities respectively, the sea sand grains and the shells which having their the settling final velocities higher than the flowing velocities of the upward medium flow settling downwardly, and the sea sand grains and the shells which having their the settling final velocities lower than the flowing velocities of the upward medium flows being flowed upwardly along with the medium flows so as to obtain sand and shell mixtures with different particle ranges of sea sand;
(2) crushing: crushing said mixtures or crushing part of said mixtures obtained in said step (1) respectively,the shells in the mixtures being crushed into smaller pieces because their strength is lower than that of the sea sand;
(3) hydraulic separating: re-washing said mixtures or re-washing part of said mixtures obtained in said step (2) by using upward medium flows respectively, the shells in the mixtures being flowed upwardly along with medium flows because of their settling final velocities lower than the flowing velocities of the upward medium flows, the sea sand grains settling downwardly because of their settling final velocities higher than the flowing velocities of the upward medium flow, thereby separating the sea sand grains from the shells; wherein the velocities of the medium flows should be higher than the settling final velocities of the crushed shells, but should be lower than the settling final velocities of the sea sand grains in the mixtures being re-washed.

The method for removing the shells in the sea sand of the present invention has the advantages of utilizing the physical properties of the shells and the sand grains and the characteristic that the shells are lower than the sand grains in strength, adopting a treatment method combined with mechanical screening, hydraulic classification and crushing and being simple in process, various in form, low in cost, free of environmental pollution and good in separation effect.

**Detailed Description of the Embodiments**

The present invention is further described in detail in combination with the following specific embodiments.

**Embodiment 1**

In the embodiment, shells and sand grains are separated according to the different physical properties of the shells and the sand grains. The shells and sea sand are mixed together to form heterogeneous mixtures, the shells and the sea sand are similar in density, and the shells and the sea sand are difficult to separate by adopting a common method. In the sea sand, the shells and the sand grains are mixed together, the grain size of the sand grains in the sea sand is distributed from small to large, and the shells in the sea sand are relatively complicated in texture and slightly large in apparent density, are dispersedly distributed from small to large in size and are different in size and also different in shape after undergoing long-time seawater movements. The shells generally exist in a shell skin mode, are in shapes of irregular flakes, while the sea sand is massive or quasi-rounded solid grains. The detailed description of the method for removing the shells in the sea sand in the embodiment is as follows:
firstly, screening is performed by using screens with the hole diameters of 10 mm to remove large-grain-size sand grains, stones and large shells greater than 10 mm in grain size, and then the obtained sea sand grain and shell mixtures are sequentially screened in the screen hole diameter sequence from large to small to obtain sea sand grain and shell mixtures of different fixed grain size intervals; the hole diameters of the screens are gradually decreased in the range which is not greater than 10 mm.
For effectively removing the shells, ensuring a removal effect and preventing the shells from being left in the sea sand, the ratio of the large hole diameters to the small hole diameters of the screens for every two adjacent times of screening should not be greater than 10 to ensure a screening effect. In the embodiment, the total number of the screening times is 5, the hole diameters of the screens are 4.75 mm, 2.5 mm, 1.0 mm, 0.28 mm and 75 $\mu$m in sequence, and the sea sand grain and shell mixtures with the grain size intervals of 2.5 to 4.75 mm, 1 to 2.5 mm, 0.28 to 1.0 mm, 75 $\mu$m to 0.28 mm and 0 to 75 $\mu$m respectively are obtained. Due the fact that the sea sand grains of 0 to 75 $\mu$m are lower than the lower limit of natural sand prescribed in the natural building sand standard, the sea sand cannot serve a building material, and sea sand treatment is not needed to be considered. This is not repeated in the embodiments below.
Then, separation treatment is performed, namely the above obtained sea sand grain and shell mixtures of different grain size intervals are respectively screened again to achieve separation. The screen holes of the screens for this time of separation are long and narrow, the horizontal maximum widths of the long and narrow screen holes are not greater than upper limit values of the grain size intervals of the sea sand grain and shell mixtures screened again, and preferably are not greater than lower limit values of the grain size intervals of the sea sand grain and shell mixtures screened again. The longitudinal lengths of the long and narrow screen holes are preferably greater than the upper limit values of the grain size intervals of the sea sand grain and shell mixtures screened again, so that the shells in the mixtures fall down from the screen holes and the sea sand grains are intercepted by the screens to achieve the separation of the sea sand grains and the shells. Mixtures containing sea sand grains of different grain sizes can be obtained by mixing the sea sand grains of different grain size intervals obtained through each time of separation together, and building sand which can be used in the building field can be obtained by conducting desalting treatment on the mixtures.

In the separation step of the embodiment, separation is performed by respectively using screens with rectangular screen holes, the mixtures of each grain size interval are divided into two groups, and the screen hole sizes of the used screens are specifically shown in the following table:

| the grain size intervals of the sea sand grain and shell mixtures screened | the shape of the screen holes | the screen hole sizes (the first group) | the screen hole sizes (the second group) |
|---|---|---|---|
| 2.5~4.75mm | rectangle | length 4.25mm width 2.45mm | length 5mm width 2.25mm |
| 1.0~2.5mm | rectangle | length 2mm width 1 mm | length 2.5mm width 0.8mm |
| 0.28~1.0mm | rectangle | length 0.8mm width 0.25mm | length 1.2mm width 0.25mm |
| 75$\mu$m~0.28mm | rectangle | length 0.25mm width 70$\mu$m | length 0.30mm width 70$\mu$m |

The shells in the mixtures of each grain size interval can fall down from the screen holes while the sea sand grains in the mixtures can be intercepted by the screens to achieve the separation of the sea sand grains and the shells through re-screening and separation conducted on the mixtures of different grain size intervals.

In the first group of separation examples of the embodiment, the horizontal maximum widths of the screen holes in the separation step are not greater than the lower limit values of the grain size intervals of the sea sand grain and shell mixtures screened again.

In the second group of separation examples of the embodiment, the longitudinal lengths of the screen holes in the separation step are greater than the upper limit values of the grain size intervals of the sea sand grain and shell mixtures screened again.

In the embodiment, the hole diameters of the screens in the screening step change in the range of 75 $\mu$m to 4.75 mm grade by grade, and the hole diameter ratio of the adjacent large and small screens in the screening step is not greater than 4.

The screen holes of the screens used in the separation step of the method of the present invention are not limited to rectangular shapes, can be also in shapes of trapezoids, parallelograms, irregular quadrangles, pentagons, hexagons or even other polygons, and are only required to meet the requirement that the horizontal maximum widths of the screen holes are not greater than the upper limit values of the grain size intervals of the sea sand grain and shell mixtures screened again and preferably are not greater than the lower limit values of the grain size intervals of the sea sand grain and shell mixtures screened again.

The screen holes of the screens used in the separation step of the method of the present invention can be also in oval shapes, and the lengths of the short axes of the screen holes should not be greater than the upper limit values of the grain size intervals of the sea sand grain and shell mixtures screened again and preferably are not greater than the lower limit values of the grain size intervals of the sea sand grain and shell mixtures screened again. The lengths of the short axes of the screen holes are greater than the lower limit values of the grain size intervals of the sea sand grain and shell mixtures screened again and preferably are greater than the upper limit values of the grain size intervals of the sea sand grain and shell mixtures screened again.

By utilizing the above screens, the granular sand grains with the diameters greater than the lower limit values of the grain size intervals can be intercepted by the screens and retained on the screens, while the flake shells are constantly changed in position during vibration of the screens, then slip and fall off from the gaps greater than the lower limit values of the grain size intervals among the screen holes and accordingly are separated out from the mixtures.

The screens used in the separation step of the method of the present invention can be also gratings, and the spacing between every two adjacent grating bars is not greater than the upper limit values of the grain size intervals of the sea sand grain and shell mixtures screened again.

By utilizing such gratings, the granular sand grains with the diameters greater than the lower limit values of the grain size intervals can be intercepted by the screens and retained on the screens, while the flake shells are constantly changed in position during vibration of the gratings, then slip and fall off from the gaps among adjacent grating bars of the gratings and accordingly are separated out from the mixtures.

After the screening step and before the separation step of the method of the present invention, the method can further comprise the following steps:

(1') performing crushing: respectively crushing the sea sand grain and shell mixtures of different grain size intervals obtained in the screening step and crushing the shells lower than the sea sand grains in strength into smaller pieces. The sea sand grain and shell mixtures of different rain size intervals obtained in the screening step are respectively crushed so that the shells lower than the sand grains in strength can be crushed into smaller pieces by utilizing the characteristic that the strength of the shells is far lower than that of the sand grains, while the sand grains are higher in hardness and are not easily crushed, and the amount of the crushed sand grains is not large, so that separation is performed again. The advantage of this way is that the shell separating effect can be better ensured. In addition, due to the fact the sizes of the shells are decreased already, the shells more easily slip off from the screen holes, the separating efficiency is improved, and the separating time is shortened.

Further, the steps which can be added between the crushing step and the separation step are as follows:

(1") performing secondary screening: respectively conducting secondary screening on the sea sand grain and shell mixtures of each of different rain size intervals obtained in the step (1'), wherein the purpose of the secondary screening is to ensure that the sand grains are not screened out, and only small-sized crushed shells fall down from the screen holes. Therefore, the sizes of the screen holes of the screens for the secondary screening should be not greater than the lower limit values of the grain size intervals of the screened sea sand and shell mixtures, and accordingly the better separating effect can be ensured.

The sea sand without shells but containing the sand grains of different grain size intervals can be obtained by mixing the sand grains obtained through the previous screens.

According to the invention, multiple sea sand and shell mixtures having a certain grain size intervals are firstly formed by adopting a multi-stage screening concept, and then sea sand and shells are separated by utilizing their different physical properties.

When the method of the present invention is carried out, the screening times, the sizes of the screen holes and/or the shapes and sizes of the screen holes of the screens used in the separation step can be properly adjusted according to the grain size situations of the sea sand and shell mixtures to be separated actually so as to ensure that the mixed shells are removed.

The method for removing the shells in the sea sand of the present invention has the advantages that the process is simple, the costs are low and the separating effect is good by adopting a mechanical screening method.

**Embodiment 2**

The difference between the embodiment and the embodiment mainly lies in that the separation of the sea sand grains and the shells is achieved by adopting a screening and crushing combined method. Detailed description of the embodiment is as follows:

firstly, screening is performed by using screens with the hole diameters of 10 mm to remove large-grain-size sand grains, stones and large shells greater than 10 mm in grain size, and then the obtained sea sand grain and shell mixtures are sequentially screened in the screen hole diameter sequence from large to small to obtain sea sand grain and shell mixtures of different fixed grain size intervals. the hole diameters of the screens are gradually increased in the range which is not greater than 10 mm. For effectively removing the shells, ensuring a removal effect and preventing the shells from being left in the sea sand, the ratio of the large hole diameters to the small hole diameters of the screens for every two adjacent times of screening should not be greater than 10 to ensure a screening effect. In the embodiment, the total number of the screening times is 5, the hole diameters of the screens are 75 $\mu$m, 0.28 mm, 1.0 mm, 2.5 mm and 4.75 mm in sequence, and the sea sand grain and shell mixtures with the grain size intervals of 0 to 75 $\mu$m, 75 $\mu$m to 0.28 mm, 0.28 to 1.0 mm, 1 to 2.5 mm and 2.5 to 4.75 mm respectively are obtained;

then performing crushing: respectively crushing the sea sand grain and shell mixtures of different grain size intervals obtained in the screening step and crushing the shells lower than the sand grains in strength into smaller pieces;

and then performing separation: re-screening the sea sand grain and shell mixtures of each of different grain size intervals obtained after crushing, wherein the hole diameters of the screens for re-screening are not greater than the upper limit values of the grain size intervals of the screened mixtures; the shells in the mixtures fall down from the screen holes, and the sand grains in the sea sand in the mixtures are intercepted by the screens to achieve separation of the sea sand grains and the shells.

The hole diameters of the screens for the above re-screening are preferably not greater than the lower limit values of the grain size intervals of the screened mixtures, and accordingly the shells in the mixtures can be thoroughly removed by filtration to achieve an excellent separating effect.

In the embodiment, the hole diameters of the screens in the screening step change in the range of 75 μm to 4.75 mm grade by grade, and the hole diameter ratio of the adjacent large and small screens in the screening step is not greater than 4.

In the embodiment, the screen holes of the screens in the screening step are round and can be also square or triangular.

**Embodiment 3**

Similar to the embodiment 1, in the embodiment, the shells and the sand grains are separated according to the different physical properties of the shells and the sand grains in sea sand. Detailed description of the embodiment is as follows:

firstly, sea sand containing shells is screened by using screens with long and narrow screen holes in the screen hole diameter sequence from large to small, and the horizontal widths of the screen holes are gradually decreased in the range which is not greater than 10 mm. For effectively removing the shells, ensuring a removal effect and preventing the shells from being left in the sea sand, the horizontal width ratio of the screen holes of every two adjacent grades of screens is not greater than 10 so as to ensure the screening effect and obtain the sea sand grain and shell mixtures of different grain size intervals.

In the embodiment, the screens used in the screening step are gratings, the total number of the screening times is 5, the intervals of the adjacent grating bars of every two adjacent grades of gratings are 4.75 mm, 2.4 mm, 1.1 mm, 0.29 mm and 75 μm in sequence, and the sea sand grain and shell mixtures with the grain size intervals of 2.4 to 4.75 mm, 1.1 to 2.4 mm, 0.29 to 1.1 mm, 75 μm to 0.29 mm and 0 to 75 μm respectively are obtained.

Then, the sea sand grain and shell mixtures of different grain size intervals obtained in the above screening step are respectively separated, and screened again, due to the fact that the radial lengths of the shells in the mixtures should be greater than the grain sizes of the sea sand grains, the maximum widths of the screen holes in re-screening should be equal to or greater than the upper limit values of the grain size intervals of the screened mixtures and preferably are slightly greater than the upper limit values of the grain size intervals of the screened mixtures, the shells in the mixtures are intercepted by the screens, the sea sand grains in the mixtures fall down from the screen holes to obtain sea sand grains of different grain size intervals, and separation of the sea sand grains and the shells is achieved.

In the separation step of the embodiment, the screens with the hole diameters shown in the following table are respectively used for separating treatment:

| the grain size intervals of the sea sand grain and shell mixtures screened | the shape ofthe screen holes | the screen hole sizes |
| --- | --- | --- |
| 2.4~4.75mm | round | Diameter 4.75mm |
| 1.1~2.4mm | round | Diameter 2.5mm |
| 0.29~1.1mm | round | Diameter 1.1 mm |
| 75μm~0.29mm | round | Diameter 0.3mm |

In the embodiment, the screen holes of the screens in the separation step are round and can be also square or triangular.

**Embodiment 4**

Similar to the embodiment 3, in the embodiment, the shells and the sand grains are separated according to the different physical properties of the shells and the sand grains in sea sand. Detailed description of the embodiment is as follows:

Firstly, sea sand containing shells is screened by using screens with long and narrow screen holes in the screen hole diameter sequence from large to small, and the horizontal widths of the screen holes are gradually increased in the range which is not greater than 10 mm. For effectively removing the shells, ensuring a removal effect and preventing the shells from being left in the sea sand, the horizontal width ratio of the screen holes of every two adjacent grades of screens is not greater than 10 so as to ensure the screening effect and obtain the sea sand grain and shell mixtures of different grain size intervals. In the embodiment, the total number of the screening times is 5, the screen holes used for screening are oval, and the lengths of the short axes of the screen holes, namely the horizontal widths of the screen holes, are 75 $\mu$m, 0.28 mm, 1.0 mm, 2.5 mm and 4.75 mm in sequence. In the method, the longitudinal lengths of the long and narrow screen holes are not needed to be limited excessively, the lengths of the long axes of the oval screen holes in the embodiment, namely the longitudinal lengths, are 0.3 mm, 1.4 mm, 5 mm, 10 mm and 20 mm respectively, and the sea sand grain and shell mixtures with the grain size intervals of 0 to 75 $\mu$m, 75 $\mu$m to 0.28 mm, 0.28 to 1.0 mm, 1 to 2.5 mm and 2.5 to 4.75 mm respectively are obtained.

Then the sea sand grain and shell mixtures of different grain size intervals obtained in the screening step are respectively crushed so that the shells lower than the sand grains in strength can be crushed into smaller pieces.

Then, a separation step is executed: the sea sand grain and shell mixtures of each of different grain size intervals obtained after crushing are respectively screened again by using screens with long and narrow screen holes, and the horizontal maximum widths of the long and narrow screen holes for this time of screening should not be greater than lower limit values of the grain size intervals of the sea sand grain and shell mixtures screened again; After the crushing step is executed, the sizes of the shells are obviously changed, while the grain size ranges of the sand grains are changed not much, the shells in the mixtures fall down from the screen holes, the sea sand grains in the sea sand are intercepted by the screens, and accordingly separation of the sea sand grains and the shells is achieved.

In the separation step of the embodiment, the screens with the hole diameters shown in the following table are respectively used for separating treatment:

| the grain size intervals of the sea sand grain and shell mixtures screened | the shape of the screen holes | the screen hole sizes |
| --- | --- | --- |
| 2.5~4.75mm | oval | the lengths of the long axes 5mm the lengths of the short axes 2.25mm |
| 1.0~2.5mm | oval | the lengths of the long axes 2.5mm the lengths of the short axes 0.8mm |
| 0.28~1.0mm | oval | the lengths of the long axes 1.2mm the lengths of the short axes 0.25mm |
| 75$\mu$m~0.28mm | oval | the lengths of the long axes 0.30mm the lengths of the short axes 70$\mu$m |

In the embodiment, the screen holes of the screens used in the separation step are oval, the lengths of the short axes of the screen holes, namely the horizontal widths of the screen holes, are not greater than the lower limit values of the grain size intervals of the sea sand grain and shell mixtures screened again, and the lengths of the long axes of the screen holes, namely the longitudinal lengths of the screen holes, are greater than the upper limit values of the grain size intervals of the sea sand grain and shell mixtures screened and separated again. The screen holes of the screens used in the separation step of the method are not limited to oval shapes, can be also in other shapes, such as rectangles, trapezoids, parallelograms, irregular quadrangles, pentagons, hexagons or even other polygons, and are only required to meet the requirement that the horizontal maximum widths of the screen holes are not greater than the lower limit values of the grain size intervals of the sea sand grain and shell mixtures screened again. During re-screening and separation in the method, the longitudinal lengths of the long and narrow screen holes are not needed to be limited excessively.

By utilizing the above screens, the granular sand grains with the diameters greater than the lower limit values of the grain size intervals can be intercepted by the screens and retained on the screens, while the piece-shaped shells are constantly changed in position during vibration of the screens, then slip and fall down from the screen holes and accordingly are separated out from the mixtures.

The screens used in the separation step of the method of the present invention can be also gratings, and the spacing between every two adjacent grating bars is not greater than the upper limit values of the grain size intervals of the sea sand grain and shell mixtures screened again.

By utilizing the above gratings, the granular sand grains with the diameters greater than the lower limit values of the grain size intervals can be intercepted by the screens and retained on the screens, while the flake shells are constantly changed in position during vibration of the gratings, then slip and fall off from the gaps among adjacent grating bars of the gratings and accordingly are separated out from the mixtures.

**Embodiment 5**

The shells and sea sand are mixed together to form heterogeneous mixtures, the shells and the sea sand are similar in density, and the shells and the sea sand are difficult to separate by adopting a common method. In the sea sand, the shells and the sand grains are mixed together, the grain size of the sand grains in the sea sand is distributed from small to large, and the shells in the sea sand are relatively complicated in texture and slightly large in apparent density, are dispersedly distributed from small to large in size and are different in size and also different in shape after undergoing long-time seawater movements. The shells generally exist in a shell skin mode, are in shapes of irregular flakes, while the sea sand is massive or quasi-rounded solid grains. The strength of the shells is far lower than that of the sand grains, the final settling velocities of the spherical grains in the same size and density of grains are maximum, and the final settling velocities of other irregular-shaped grains are correspondingly lower. The cause is that resistance coefficients of the irregular-shaped grains are larger than those of the spherical grains. Sheet shells have larger resistance coefficients than the massive or quasi-rounded sand grains and have different settling velocities in a Newtonian fluid force field. Therefore, another method for removing shells in sea sand is provided in the embodiment according to different physical properties of the shells and the sand grains in the sea sand, namely multiple sea sand and shell mixtures of certain grain size intervals are formed by adopting multi-stage screening, and then sea sand and shells are separated by utilizing the difference of the settling velocities caused by their different shapes and adopting a hydraulic classification method. Detailed description of the embodiment is as follows:

firstly, screening is performed by using screens with the hole diameters of 10 mm to remove large-grain-size sand grains, stones and large shells greater than 10 mm in grain size, and then the obtained sea sand grain and shell mixtures are sequentially screened in the screen hole diameter sequence from large to small to obtain sea sand grain and shell mixtures of different fixed grain size intervals; The hole diameters of the screens are gradually increased in the range which is not greater than 10 mm. For effectively removing the shells, ensuring a removal effect and preventing the shells from being left in the sea sand, the ratio of the large hole diameters to the small hole diameters of the screens for every two adjacent times of screening should not be greater than 20, preferably not greater than 4, so as to ensure a screening effect. In the embodiment, the total number of the screening times of the round-hole screens is 5, the hole diameters of the screens are 75 $\mu$m, 0.28 mm, 1.0 mm, 2.5 mm and 4.75 mm in sequence, and the sea sand grain and shell mixtures with the grain size intervals of 0 to 75 $\mu$m, 75 $\mu$m to 0.28 mm, 0.28 to 1.0 mm, 1 to 2.5 mm and 2.5 to 4.75 mm respectively are obtained.

Then, a crushing step is executed: the sea sand and shell mixtures of different grain size intervals obtained in the above screening step are respectively crushed so that the shells lower than the sea sand grains in strength can be crushed into smaller pieces by utilizing the characteristic that the strength of the shells is far lower than that of the sand grains, while the amount of the crushed sand grains is not large so that the shell separating effect of the subsequent separation step can be better ensured.

Then, hydraulic separation is performed: the sea sand and shell mixtures of different grain size intervals obtained in the screening step are respectively scoured by using rising medium flows, the shells with the settling final velocities in the mixtures lower than the flowing velocities of the rising medium flows are upward with water flows, the sand grains with the settling final velocities in the mixtures higher than the flowing velocities of the rising medium flows downwards settle so as to achieve separation of the sea sand and the shells; the velocities of the medium flows should be higher than the settling final velocities of the shells but should not be higher than the settling final velocities of the scoured sand grains of the grain size intervals. In the embodiment, for the sea sand grain and shell mixtures with the four grain size intervals of 75 $\mu$m to 0.28 mm, 0.28 to 1.0 mm, 1 to 2.5 mm and 2.5 to 4.75 mm, the settling final velocities of the sea sand grains and the final settling velocities of the shells are gradually calculated, the flowing velocities of the medium flows are made slightly lower than the settling final velocities of to-be-separated sea sand grains of the grain size intervals, but are higher than final settling velocities of the shells of the grain size intervals, the four calculated settling final velocities in the embodiment are all greater than 0.001 m/s but are smaller than 20 m/s, and in consideration of production efficiency, structures, grain sizes and other influence factors, the flowing velocities of the medium flows for achieving separation each time are sequentially 1 m/s, 1.5 m/s, 2.74 m/s and 5.88 m/s respectively.

The settling final velocities u0 of the settled grains are calculated by using a Stokes formula as follows:

$$v_0 = \frac{h}{t} = k\frac{r^2(d_1 - d_2)g}{18\mu}$$

u-settling velocities of grains (cm/s),
g-gravitational acceleration,
r-radiuses of grains (cm),
$d_1$-specific gravities of grains,
$d_2$-specific gravity of water medium,
$\mu$-viscosity of water medium,
$\kappa$-shape factor changing with shapes, $\kappa$=0.222 for spherical grains, and $\kappa$=0.040 for flaky grains.

The medium flows in the embodiment are water flows, and the medium flows in the method of the present invention can be also seawater flows.

Preferably, in the method of the present invention, the crushing step after the screening step and before the separation step can be further added: the sea sand grain and shell mixtures of different grain size intervals obtained in the screening step are respectively crushed so that the shells lower than the sand grains in strength can be crushed into smaller pieces, while the amount of the crushed sand grains is not large so that the shell separating effect of the subsequent separation step can be better ensured.

When the method of the present invention is specifically carried out, the screening times, the shapes and sizes of the screen holes and the velocities of the water flows during hydraulic separation can be properly adjusted according to the grain size situations of the sea sand and shell mixtures to be separated actually so as to ensure that the mixed shells are removed.

**Embodiment 6**

Detailed description of the embodiment is as follows:

Sea sand containing shells is scoured by adopting rising medium flows different in velocity respectively to from down to top, the sand grains and shells with the settling final velocities in the mixtures higher than the flowing velocities of the rising medium flows settle downwards, the sand grains and shells with the settling final velocities in the mixtures lower than the flowing velocities of the rising medium flows are upward with water flows. In the embodiment, the velocities of the medium flows are increased stage by stage within the range of 0.001 m/s to 20 m/s, the mixtures obtained due to settlement after scouring of each stage are scoured again by the medium flows of next stage, and the mixtures obtained due to rise with the medium flows after all stages of scouring are the sand grain and shell mixtures of different grain size interval; In the embodiment, the calculated settling final velocities of the obtained sea sand grains are all greater than 0.001 m/s but are smaller than 20 m/s, and in consideration of production efficiency, structures, grain sizes and other influence factors, the flowing velocities of the medium flows are sequentially 0.05 m/s, 1 m/s, 1.5 m/s, 2.74 m/s and 5.88 m/s respectively, and the sea sand grain and shell mixtures with the grain size intervals of 0 to 75 $\mu$m, 75 $\mu$m to 0.28 mm, 0.28 to 1.0 mm, 1 to 2.5 mm and 2.5 to 4.75 mm respectively are obtained.

According to the method of the present invention, the velocities of the medium flows can be also decreased stage by stage within the range of 0.001 m/s to 20 m/s, the mixtures obtained due to rise with the medium flows after each stage of scouring are scoured again by the medium flows of next stage, and the mixtures obtained due to settlement after each stage of scouring are the sand grain and shell mixtures of different grain size interval;

then, a crushing step is executed: the sea sand and shell mixtures of different grain size intervals obtained in the above hydraulic classification step are respectively crushed so that the shells lower than the sea sand grains in strength can be crushed into smaller pieces by utilizing the characteristic that the strength of the shells is far lower than that of the sand grains, while the amount of the crushed sand grains is not large so that the shell separating effect of the subsequent separation step can be better ensured.

Then, screening separation is performed: the sea sand grain and shell mixtures of each grain size interval obtained in the above step are respectively screened, the hole diameters of the used screens should be equal to or slightly greater than upper limit values of the grain size intervals of the screened mixtures, the sand grains in the mixtures fall down from the screen holes and the shells are intercepted by the screens so as to achieve separation of the sea sand grains and the shells.

In the embodiment, the screen holes of the screens used for the screening are round, and the diameters of the screen holes are 75 μm, 0.3 mm, 1.0 mm, 2.6 mm and 5 mm respectively.

The screen holes adopted in the method of the present invention can be also in other shapes, such as squares or triangles.

When the method of the present invention is specifically carried out, the screening times, the shapes and sizes of the screen holes and the velocities of the water flows during hydraulic separation can be properly adjusted according to the grain size situations of the sea sand and shell mixtures to be separated actually so as to ensure that the mixed shells are removed.

The method of the present invention adopts a mechanical screening and hydraulic classification combined method, relative motions of the shells and the sand grains can be achieved in a man-made fluid field in the separation step by utilizing the difference of additional resistances of different shapes of objects similar in density in a Newtonian fluid field according to the different shapes of the shells and the sand grains, and accordingly the shells and the sand grains are separated. In the embodiment, the range of heterogeneous object separation adapting to physical property difference is widened, the Newtonian fluid field is introduced to sea sand separation and is similarly applicable to the separation of other similar heterogeneous objects, the process is simple, the costs are low, the environment is not polluted, and the separating effect is good.

**Embodiment 7**

Similar to the embodiment 6, in the embodiment, the shells and the sand grains are separated according to the different physical properties of the shells and the sand grains in sea sand. The detailed description of the embodiment is as follows:

firstly, hydraulic classification is performed: sea sand containing shells is scoured by adopting rising medium flows different in velocity respectively to from down to top, the sand grains and shells with the settling final velocities in the mixtures higher than the flowing velocities of the rising medium flows settle downwards, the sand grains and shells with the settling final velocities in the mixtures lower than the flowing velocities of the rising medium flows are upward with water flows. In the embodiment, the velocities of the medium flows are increased stage by stage within the range of 0.001 m/s to 20 m/s, the mixtures obtained due to settlement after each stage of scouring are scoured again by the medium flows of next stage, and the mixtures obtained due to rise with the medium flows after each stage of scouring are the sand grain and shell mixtures of different grain size interval; in the embodiment, the calculated settling final velocities of the obtained sea sand grains are all greater than 0.001 m/s but are smaller than 20 m/s, and in consideration of production efficiency, structures, grain sizes and other influence factors, the flowing velocities of the medium flows are sequentially 0.05 m/s, 1 m/s, 1.5 m/s, 2.74 m/s and 5.88 m/s respectively, and the sea sand grain and shell mixtures with the grain size intervals of 0 to 75 μm, 75 μm to 0.28 mm, 0.28 to 1.0 mm, 1 to 2.5 mm and 2.5 to 4.75 mm respectively are obtained.

According to the method of the present invention, the velocities of the medium flows can be also decreased stage by stage within the range of 0.001 m/s to 20 m/s, the mixtures obtained due to rise with the medium flows after each stage of scouring are scoured again by the medium flows of next stage, and the mixtures obtained due to settlement after each stage of scouring are the sand grain and shell mixtures of different grain size interval.

Then, a crushing step is executed: the sea sand and shell mixtures of different grain size intervals obtained in the above hydraulic classification step are respectively crushed so that the shells lower than the sea sand grains in strength can be crushed into smaller pieces by utilizing the characteristic that the strength of the shells is far lower than that of the sand grains, while the amount of the crushed sand grains is not large so that the shell separating effect of the subsequent separation step can be better ensured.

Then, separation is performed: the crushed sea sand grain and shell mixtures of different grain size intervals obtained through the crushing step are respectively scoured by using medium flows again from down to top, the final settling velocities of the sea sand grain and shell mixtures also become low obviously due to the fact that the sizes of the shells are obviously decreased, as long as the flowing velocities of the medium flows are made slightly lower than the settling final velocities of the scoured sand grains of the grain size intervals in the mixtures of each grain size interval, the shells with the settling final velocities in the mixtures far lower than the flowing velocities of the rising medium flows are upward with water flows, and the sand grains with the settling final velocities in the mixtures higher than the flowing velocities of the rising medium flows downwards settle so as to achieve separation of the sea sand and the shells and respectively obtain sea sand grains of different grain size intervals. In the embodiment, the sea sand grain and shell mixtures of the five grain size intervals of 75 μm to 0.28 mm, 0.28 to 1.0 mm, 1 to 2.5 mm and 2.5 to 4.75 mm, and the flowing velocities of the adopted medium flows are 0.8 m/s, 1.3 m/s, 2.5 m/s and 5.0 m/s respectively. The above detailed descriptions of the specific embodiments according to the present invention are provided for illustration only, not for the purpose of limiting the protection scope of the present invention in any form, and any equivalent change or modification made based upon the design spirit of the present invention should be fall within the protection scope of the present invention.

**Claims**

1. A new method of removing shells contained in sea sand, comprising the steps of:

   (1) screening: screening sea mixed with shells by using screens with different apertures respectively so as to obtain sand and shell mixtures with different size ranges of sea sand particles;
   (2) separating: re-screening said mixtures or re-screening part of said mixtures obtained in said step (1) respectively by using screens with long and narrow apertures, enabling the shells in the mixtures to pass through the screen apertures and enabling the sand grains to be retained by the screens, thereby separating the sea sand grains from the shells; the maximum horizontal width of the long and narrow apertures of each screen not being greater than the upper limit value of the particle size range of the sea sand in said mixtures being re-screened thereof.

2. The method according to claim 1, characterized that the maximum horizontal width of the long and narrow apertures of each screen in said step (2) being not greater than the lower limit value of the particle size range of the sea sand in said mixtures being re-screened .

3. The method according to claim 1, characterized that the method further comprising the following step which is after said step (1) of screening but before said step (2) of separating:

   (1') crushing: crushing said mixtures or crushing part of said mixtures obtained in said step (1) respectively, wherein the shells in the mixtures being crushed into smaller pieces because their strength is lower than that of the sea sand.

4. A new method of removing shells contained in sea sand, comprising the steps of:

   (1) screening: screening sea sand mixed with shells by using screens with different apertures so as to obtain sand and shells mixtures with different particle size ranges of sea sand;
   (2) crushing: crushing said mixtures or crushing part of said mixtures obtained in said step (1) respectively, the shells in the mixtures being crushed into smaller pieces because their strength is lower than that of the sea sand;
   (3) separating: re-screening said mixtures or re-screening part of said mixtures obtained in said step (2) respectively by using screens with its aperture not being greater than the upper limit value of the particle size range of the sea sand in the mixtures being re-screened thereof, enabling the shells in the mixtures to pass through the apertures of the screens and enabling the sand grains to be retained by the screens, thereby separating the sea sand grains from the shells.

5. A new method of removing shells contained in sea sand, comprising the steps of:

   (1) screening: screening sea sand mixed with shells by using screens with long and narrow apertures but different horizontal widths of the apertures for each screen so as to obtain sand and shell mixtures with different particle size ranges of sea sand;
   (2) separating: re-screening said mixtures or re-screening part of said mixtures obtained in said step (1) respectively by using screens with the maximum width of the apertures of each screen being greater than the lower limit value of the particle size range of the sea sand grains in said mixtures being re-screened thereof, enabling the shells in the mixtures to be kept by the screens and enabling the sand grains to pass through the apertures of the screens, thus separating the sea sand grains from the shells and obtaining the sand grains with different particle size ranges.

6. A new method of removing shells contained in sea sand, comprising the steps of:

   (1) screening: screening sea sand mixed with shells by using screens with long and narrow apertures but different horizontal width for each screen so as to obtain sand and shell mixtures with different particle size ranges of the sea sand;
   (2) crushing: crushing said mixtures or crushing part of said mixtures obtained in said step (1) respectively, the shells in the mixtures being crushed into smaller pieces because their strength is lower than that of the sea sand;
(3) separating: re-screening said mixtures or re-screening part of said mixtures obtained in said step (2) respectively by using screens with its apertures of each screen not being greater than the upper limit values of the particle size range of the sea sand grains in said mixtures being re-screened thereof, enabling the shells in the mixtures to pass through the apertures of the screens and enabling the sand grains to be retained by the screens, thereby separating the sea sand grains from the shells.

7. A new method for removing shells contained in sea sand, comprising the steps of:

(1) screening: screening sea sand mixed with shells by using screens with different apertures so as to obtain sand and shell mixtures with different particle size ranges of the sea sand;
(2) crushing: crushing said mixtures or crushing part of said mixtures obtained in said step (1) respectively, the shells in the mixtures being crushed into smaller pieces because their strength is lower than that of the sea sand;
(3) hydraulic separating: washing said mixtures or washing part of said mixtures obtained in said step (2) by using upward medium flows with different flow velocities respectively, the shells in the mixtures being flowed upwardly along with said medium flows because of its settling final velocity lower than the velocities of upward medium flow, the sea sand grains in the mixtures settling downwardly because of its settling final velocities higher than the velocities of the upward medium flow, thereby separating the sea sand grains from the shells; wherein the velocities of the upward medium flows should be not higher than the settling final velocities of the sand grains being washed,but should be higher than the settling final velocities of said crushed shells.

8. A method of removing shells contained in sea sand, comprising the steps of:

(1) hydraulic separating: washing sea sand mixed with shells by using upward medium flows of different flow velocities, such that the sea sand grains and shells which having their settling final velocities higher than the flow velocity of the respective upward medium flow settle downwardly, and such that sea sand grains and shells which having settling final velocity lower than the flow velocity of the respective upward medium being flowed upwardly along with the respective upward medium flows, thereby obtaining sand and shell mixtures with respective different ranges of particle size of sea sand;
(2) crushing: crushing said mixtures or crushing part of said mixtures obtained in said step (1) respectively, wherein the shells in the mixtures are crushed into smaller pieces because their strength is lower than that of the sea sand;
(3) separating: screening said mixtures or screening part of each mixture obtained in said step (2) respectively by using screens having apertures of a size smaller than the upper limit values of the respective particle size range of the sea sand grains in the mixture being screened thereof, enabling the crushed shells in the mixtures to pass through the screen apertures and enabling the sand grains to be retained by the screens, thereby separating the sea sand grains from the shells.

9. A method of removing shells contained in sea sand, comprising the steps of:

(1) hydraulic separating: washing sea sand mixed with shells by using upward medium flows with different flowing velocities respectively, the sea sand grains and the shells which having their the settling final velocities higher than the flowing velocities of the upward medium flow settling downwardly, and the sea sand grains and the shells which having their the settling final velocities lower than the flowing velocities of the upward medium flows being flowed upwardly along with the medium flows so as to obtain sand and shell mixtures with different particle ranges of sea sand;
(2) crushing: crushing said mixtures or crushing part of said mixtures obtained in said step (1) respectively, the shells in the mixtures being crushed into smaller pieces because their strength is lower than that of the sea sand;
(3) hydraulic separating: re-washing said mixtures or re-washing part of said mixtures obtained in said step (2) by using upward medium flows respectively, the shells in the mixtures being flowed upwardly along with medium flows because of their settling final velocities lower than the flowing velocities of the upward medium flows, the sea sand grains settling downwardly because of their settling final velocities higher than the flowing velocities of the upward medium flow, thereby separating the sea sand grains from the shells; wherein the velocities of the medium flows should be higher than the settling final velocities of the crushed shells, but should be lower than the settling final velocities of the sea sand grains in the mixtures being re-washed.

# INTERNATIONAL SEARCH REPORT

| International application No. |
| --- |
| **PCT/CN2015/000022** |

## A. CLASSIFICATION OF SUBJECT MATTER

C04B 14/06 (2006.01) i

According to International Patent Classification (IPC) or to both national classification and IPC

## B. FIELDS SEARCHED

Minimum documentation searched (classification system followed by classification symbols)

C04B

Documentation searched other than minimum documentation to the extent that such documents are included in the fields searched

Electronic data base consulted during the international search (name of data base and, where practicable, search terms used)

CNMED; CPRSABS; CNABS; SIPOABS, VEN: sea sand, river sand, net, separate, sea, river, sand, siev???, remov???, filtrat???, leach???, sift???, conch, shell

## C. DOCUMENTS CONSIDERED TO BE RELEVANT

| Category* | Citation of document, with indication, where appropriate, of the relevant passages | Relevant to claim No. |
| --- | --- | --- |
| X | CN 202808626 U (YANG, Lanqin), 20 March 2013 (20.03.2013), description, page 1, and figure 1 | 1-2, 5 |
| Y | CN 202808626 U (YANG, Lanqin), 20 March 2013 (20.03.2013), description, page 1 | 3-4, 6-9 |
| Y | CN 102849971 A (YANG, Lanqin), 02 January 2013 (02.01.2013), description, page 2, and figures 1-2 | 7-9 |
| Y | JP 2002128551 A (YAMAMOTO, Y.), 09 May 2002 (09.05.2002), abstract | 3-4, 6-9 |
| A | CN 102838304 A (QINGDAO LEIXIN NEW BUIDLING MATERIAL CO., LTD.), 26 December 2012 (26.12.2012), the whole document | 1-9 |
| A | JP 0774088 B2 (YAMAMOTO, Y.), 09 August 1995 (09.08.1995), the whole document | 1-9 |

☐ Further documents are listed in the continuation of Box C.  ☒ See patent family annex.

| | |
| --- | --- |
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 18 March 2015 (18.03.2015) | **25 March 2015 (25.03.2015)** |

| Name and mailing address of the ISA/CN: State Intellectual Property Office of the P. R. China No. 6, Xitucheng Road, Jimenqiao Haidian District, Beijing 100088, China Facsimile No.: (86-10) 62019451 | Authorized officer **FAN, Jihong** Telephone No.: (86-10) **62085477** |

Form PCT/ISA/210 (second sheet) (July 2009)

## INTERNATIONAL SEARCH REPORT
### Information on patent family members

International application No.

**PCT/CN2015/000022**

| Patent Documents referred in the Report | Publication Date | Patent Family | Publication Date |
|---|---|---|---|
| CN 202808626 U | 20 March 2013 | None | |
| CN 102849971 A | 02 January 2013 | None | |
| JP 2002128551 A | 09 May 2002 | None | |
| CN 102838304 A | 26 December 2012 | None | |
| JP 0774088 B2 | 09 August 1995 | JP H05194000 A | 03 August 1993 |

Form PCT/ISA/210 (patent family annex) (July 2009)